# EUROPEAN PATENT SPECIFICATION

(11) **EP 4 333 339 B1**
(45) Date of publication and mention of the grant of the patent: **28.01.2026**
(21) Application number: 21938199.3
(22) Date of filing: 25.04.2021
(51) Int. Cl.: H04L 1/18, H04L 1/1829

(54) **METHOD AND APPARATUS FOR TRANSMITTING CONFIGURED GRANT-DOWNLINK FEEDBACK INFORMATION, AND MEDIUM**
VERFAHREN UND VORRICHTUNG ZUR ÜBERTRAGUNG VON KONFIGURIERTEN BERECHTIGUNGSDOWNLINK-RÜCKKOPPLUNGSINFORMATIONEN UND MEDIUM
PROCÉDÉ ET APPAREIL DE TRANSMISSION D'AUTORISATION CONFIGURÉE-INFORMATIONS DE RÉTROACTION DE LIAISON DESCENDANTE, ET SUPPORT

(43) Date of publication of application: 06.03.2024
(73) Proprietor: Beijing Xiaomi Mobile Software Co., Ltd., Beijing 100085 (CN)
(72) Inventor: FU, Ting, Beijing 100085 (CN)
(74) Representative: dompatent
(86) International application number: PCT/CN2021/089734
(87) International publication number: WO 2022/226708

(56) References cited:
- WO-A1-2019/029589
- WO-A1-2020/198952
- CN-A- 110 535 565
- CN-A- 112 088 509
- CN-A- 112 398 579
- CN-A- 112 583 533
- CAICT: "Enhancements on HARQ to support NTN", vol. RAN WG1, no. e-Meeting; 20210125 - 20210205, 18 January 2021 (2021-01-18), XP051970330, Retrieved from the Internet <URL:https://ftp.3gpp.org/tsg_ran/WG1_RL1/TSGR1_104-e/Docs/R1-2100306.zip R1-2100306.docx> [retrieved on 20210118]
- NOMOR RESEARCH GMBH ET AL: "Discussion on HARQ for NTN", vol. RAN WG1, no. e-Meeting; 20200817 - 20200828, 4 August 2020 (2020-08-04), XP052346686, Retrieved from the Internet <URL:https://ftp.3gpp.org/tsg_ran/WG1_RL1/TSGR1_102-e/Docs/R1-2005312.zip R1-2005312_HARQ_NTN.doc> [retrieved on 20200804]
- SONY: "Enhancements to Configured Grants in NR-U", vol. RAN WG1, no. Reno, US; 20191118 - 20191122, 9 November 2019 (2019-11-09), XP051823359, Retrieved from the Internet <URL:https://ftp.3gpp.org/tsg_ran/WG1_RL1/TSGR1_99/Docs/R1-1912342.zip R1-1912342-configured_grant.docx> [retrieved on 20191109]
- LENOVO ET AL: "Configured grant enhancement for NR-U", vol. RAN WG1, no. Prague, CZ; 20190826 - 20190830, 16 August 2019 (2019-08-16), XP051765332, Retrieved from the Internet <URL:http://www.3gpp.org/ftp/tsg_ran/WG1_RL1/TSGR1_98/Docs/R1-1908724.zip> [retrieved on 20190816]

## Description

### TECHNICAL FIELD

The present disclosure relates to a field of wireless communication technologies, in particularly, to a method and an apparatus for transmitting configured grant-downlink feedback information (CG-DFI), and a readable storage medium.

### BACKGROUND

In new radio (NR), a 52.6 GHz to 71GHz frequency band may use a subcarrier interval of 480 kHz or 960kHz. A slot corresponding to the subcarrier interval of 480KHz is 1/32 millisecond (ms), and a slot corresponding to the subcarrier interval of 960KHz is 1/64 millisecond. For a shorter slot, a physical downlink shared channel (PDSCH) processing timing may correspond to a plurality of continuous slots, and a round trip time (RTT) may correspond to more slots, for example, one RTT time may correspond to 64 slots. In this case, it is necessary to support more parallel hybrid automatic repeat request (HARQ) processes.

The 52.6 GHz to 71GHz frequency band may also include unlicensed frequency bands for communication. In the unlicensed frequency bands, configured grant-downlink feedback information (CG-DFI) is introduced, in order to enable a user equipment (UE) to receive feedback on uplink data after sending the uplink data.

As the subcarrier interval increases and a maximum uplink HARQ process number increases, how to provide feedback for more uplink HARQ processes is a problem to be solved.

CAICT: "Enhancements on HARO to support NTN", 3GPP ORAFT; R1-2100306, 3RO GENERATION PARTNERSHIP PROJECT (3GPP), MOBILE COMPETENCE CENTRE; 650, ROUTE OES LUCIOLES; F-06921 SOPHIA-ANTIPOLIS CEOEX; FRANCE vol. RAN WG1, no. e-Meeting; 20210125 - 20210205 18 January 2021 (2021-01-18), discussed about Enhancements on HARQ to support NTN.

IOMOR RESEARCH GMBH ET AL: "Discussion on HARO for NTN", 3GPP ORAFT: R1-2005312. 3RO GENERATION PARTNERSHIP PROJECT (3GPP), MOBILE COMPETENCE CENTRE; 650, ROUTE OES LUCIOLES: F-06921 SOPHIA-ANTIPOLIS CEOEX: FRANCE vol. RAN WG1, no. e-Meeting; 20200817 - 20200828 4 August 2020 (2020-08-04), , provides discussion on HARO for NTN.

SONY: "Enhancements to Configured Grants in NR-U", 3GPP ORAFT; R1-1912342, 3RO GENERATION PARTNERSHIP PROJECT (3GPP), MOBILE COMPETENCE CENTRE; 650, ROUTE OES LUCIOLES: F-06921 SOPHIA-ANTIPOLIS CEOEX: FRANCE vol. RAN WG1. no. Reno. US: 20191118 - 20191122 9 November 2019 (2019-11-09), discussed about Enhancements to Configured Grants in NR-U

LENOVO ET AL: "Configured grant enhancement for NR-U", 3GPP ORAFT; R1-1908724-FINAL, 3RO GENERATION PARTNERSHIP PROJECT (3GPP), MOBILE COMPETENCE CENTRE; 650, ROUTE OES LUCIOLES: F-06921 SOPHIA-ANTIPOLIS CEOEX: FRANCE vol. RANWG1, no. Prague, CZ; 20190826 - 20190830 16 August 2019 (2019-08-16) , discusses configured grant enhancement for NR-U

WO 2020/198952 A1 discloses methods and apparatuses for HARQ-ACK codebook reduction. According to an embodiment of the present disclosure, a method can include: transmitting a plurality of uplink data channels to a BS; and receiving a HARQ-ACK codebook in first DCI indicating downlink feedback. At least one of the plurality of uplink data channels is configured by the BS, and each uplink data channel is associated with each HARQ process. The HARQ-ACK codebook includes at least two sub-codebooks: a first sub-codebook including TB-level HARQ-ACK information bits for a first set of HARQ processes and a second sub-codebook including CBG-level HARQ-ACK information bits for a second set of HARQ processes. The first DCI has the same size with the second DCI for scheduling uplink data transmission. Embodiments of the present disclosure can ensure both UE side and BS side have the same understanding on the reduced HARQ-ACK codebook.

### SUMMARY

The scope of the invention is defined by the appended claims

### BRIEF DESCRIPTION OF THE DRAWINGS

FIG. 1 is a schematic diagram illustrating a wireless communication system according to an embodiment of the present disclosure.
FIG. 2 is a flowchart illustrating a method for transmitting a CG-DFI according to an exemplary embodiment.
FIG. 3 is a block diagram illustrating a structure of an apparatus for transmitting a CG-DFI according to an exemplary embodiment.
FIG. 4 is a block diagram illustrating a structure of another apparatus for transmitting a CG-DFI according to an exemplary embodiment.
FIG. 5 is a block diagram illustrating a structure of another apparatus for transmitting a CG-DFI according to an exemplary embodiment.
FIG. 6 is a block diagram illustrating a structure of another apparatus for transmitting a CG-DFI according to an exemplary embodiment.

### DETAILED DESCRIPTION

Embodiments of the present disclosure is further explained in combination with the accompanying drawings and specific implementations.

The exemplary embodiments will be described in detail here, and examples thereof are shown in the accompanying drawings. When the following descriptions refer to the accompanying drawings, same numbers in different drawings represent same or similar elements unless otherwise indicated. The implementations described in the following exemplary embodiments do not represent all implementations consistent with the present disclosure. Rather, they are merely examples of apparatuses and methods consistent with some aspects of the disclosure as detailed in the appended claims.

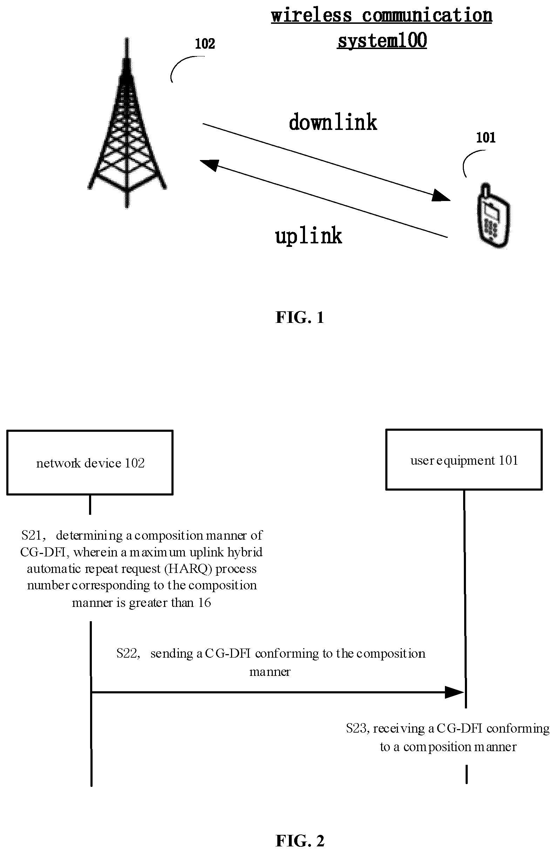

As illustrated in FIG. 1, a method for transmitting a CG-DFI in embodiments of the present disclosure is applicable for a wireless communication system 100. The wireless communication system may include a user equipment 101 and a network device 102. The user equipment 101 is configured to support carrier aggregation, and may be coupled to a plurality of carrier units of the network device 102, including a major carrier unit and one or more secondary carrier units.

It should be understood that the above wireless communication system 100 may be applied to both low-frequency and high-frequency scenarios. Application scenarios of the wireless communication system 100 may include, but is not limited to, a long term evolution (LTE) system, a frequency division duplex (FDD) system, a time division duplex (TDD) system, a worldwide interoperability for micro wave access (WiMAX) system, a cloud radio access network (CRAN) system, a future 5th generation (5G) system, a new radio (NR) mobile communication system, or other future evolution public land mobile network (PLMN) systems, etc.

The user equipment 101 shown above may be a user equipment (UE), a terminal device, an access terminal, a terminal unit, a terminal station, a mobile station (MS), a remote station, a remote terminal, a mobile terminal, a wireless communication device, a terminal agent or a terminal device, etc. The user equipment 101 may have wireless transmission and reception functions, which may communicate (such as wirelessly communicate) with one or more network devices of one or more communication systems and accept network services provided by the network devices. The network devices herein include, but are not limited to, the illustrated network device 102.

The user equipment 101 may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, a vehicle-mounted device, a wearable device, a terminal device in the future 5G network or in the future evolution PLMN networks.

The network device 102 may be an access network device (also known as an access website point). The access network device refers to a device providing a network access function, such as a radio access network (RAN) base station, etc. The network device 102 may specifically include a base station (BS), or include a base station and a wireless resource management device for controlling the base station. The network device 102 may also include a relay station (relay device), an access point, and a base station in the future 5G network, a base station or an NR base station in the future evolution PLMN networks. The network device 102 may be a wearable device or a vehicle-mounted device. The network device 102 may also be a communication chip with a communication module.

For example, the network device 102 may include, but is not limited to, a next-generation base station (gnodeB, gNB) in the 5G network, an evolved node B (eNB) or a radio network controller (RNC) in the LTE system, a node B (NB) in the WCDMA system, a wireless controller or a base station controller (BSC) in the CRAN system, a base transceiver station (BTS), a home evolved nodeB, or a home node B (HNB), a baseband unit (BBU), a transmission and receiving point (TRP), a transmission point (TP), or a mobile switching center in the GSM or CDMA system.

Embodiments of the present disclosure provide a method for transmitting a CG-DFI. Referring to FIG. 2, FIG. 2 is a flowchart illustrating a method for transmitting a CG-DFI according to an exemplary embodiment. As illustrated in FIG. 2, the method includes the following steps.

At step S21, a network device 102 determines a composition manner of CG-DFI, in which a maximum uplink hybrid automatic repeat request (HARQ) process number corresponding to the composition manner is greater than 16.

At step S22, the network device 102 sends, to a user equipment 101, a CG-DFI conforming to the composition manner.

At step S23, the user equipment 101 receives, from the network device 102, the CG-DFI conforming to the composition manner.

In some possible embodiments, the CG-DFI is activated after a CG-PUSCH transmission function is configured.

Transmitting the CG-DFI may achieve the following two functions.
1. The network device 102 provides HARQ-ACK information of the CG-PUSCH to the user equipment 101 timely to enable the user equipment 101 to adjust a size of a contention window in the next transmission.
2. The user equipment 101 may determine whether to retransmit the CG-PUSCH or terminate transmission of the CG-PUSCH in advance based on the HARQ-ACK information.

In some possible embodiments, the CG-DFI is transmitted using downlink control information (DCI) in a format 0-1, i.e. DCI 0-1, and a configured scheduled -radio network temporary identifier (CS-RNTI) is used for scrambling.

When the user equipment 101 communicates on an unlicensed frequency band, in response to detecting DCI 0-1 being configured and the CG-PUSCH transmission function being activated, the user equipment 101 detects the CG-DFI.

An embodiment of the present disclosure provides a method for sending a CG-DFI. The method is performed by a network device 102, and includes:
determining a composition manner of CG-DFI, in which, a maximum uplink hybrid automatic repeat request (HARQ) process number corresponding to the composition manner is greater than 16; and
sending, to a user equipment, a CG-DFI conforming to the composition manner.

In a possible embodiment, the CG-DFI includes a plurality of HARQ-ACK information.

In an HARQ-ACK transmission based on a transport block (TB), one TB corresponds to one HARQ-ACK bit, thus one HARQ-ACK information corresponds to one HARQ-ACK bit. For example, the CG-DFI includes 16 bits, with each bit representing one HARQ-ACK information.

In an HARQ-ACK transmission based on code block group (CBG), one TB includes a plurality of CBGs, one HARQ-ACK information corresponds to HARQ-ACK information of one TB, and each CGB corresponds to one HARQ-ACK bit. Therefore, one HARQ-ACK information corresponds to a plurality of HARQ-ACK bits. For example, the CG-DFI includes 16 bits, with every 2 bits representing one HARQ-ACK information.

In an embodiment of the present disclosure, for a situation where the maximum uplink HARQ process number is greater than 16, the corresponding composition method of the CG-DFI is set. The CG-DFI conforming to the composition manner is formed based on the composition manner, and the CG-DFI conforming to the composition manner is sent to the user equipment 101. Therefore, in application scenarios where the maximum uplink HARQ process number is greater than 16, the CG-DFI conforming to the composition manner may reflect HARQ-ACK information of all or part of the uplink HARQ processes corresponding to the maximum uplink HARQ process number.

An embodiment of the present disclosure provides a method for sending a CG-DFI. The method is performed by a network device 102, and includes:
determining a composition manner of CG-DFI, in which, a maximum uplink hybrid automatic repeat request (HARQ) process number corresponding to the composition manner is greater than 16; and
sending, to a user equipment, a CG-DFI conforming to the composition manner, in which, HARQ-ACK information in the CG-DFI conforming to the composition manner corresponds to all or part of the uplink HARQ processes with the maximum uplink HARQ process number.

In an embodiment of the present disclosure, for a situation where the maximum uplink HARQ process number is greater than 16, the corresponding composition method of the CG-DFI is set. The CG-DFI conforming to the composition manner is formed based on the composition manner, and the CG-DFI conforming to the composition manner is sent to the user equipment 101. Therefore, in application scenarios where the maximum uplink HARQ process number is greater than 16, the CG-DFI conforming to the composition manner may reflect HARQ-ACK information of all or part of the uplink HARQ processes corresponding to the maximum uplink HARQ process number.

An embodiment of the present disclosure provides a method for sending a CG-DFI. The method is performed by a network device 102, and includes:
sending a wireless link layer signaling to the user equipment, in which the wireless link layer signaling includes first indication information configured to indicate the composition manner of CG-DFI, a maximum uplink HARQ process number corresponding to the composition manner is greater than 16; and
sending, to a user equipment, a CG-DFI conforming to the composition manner.

In an embodiment of the present disclosure, the first indication information configured to indicate the composition manner of CG-DFI is sent through the wireless link layer signaling, enabling the user equipment 101 to clearly understand the composition manner of CG-DFI. Therefore, the CG-DFI is accurately parsed.

An embodiment of the present disclosure provides a method for sending a CG-DFI. The method is performed by a network device 102, and includes:
determining the composition manner of CG-DFI agreed in a protocol, in which, a maximum uplink HARQ process number corresponding to the composition manner is greater than 16; and
sending, to a user equipment, a CG-DFI conforming to the composition manner.

In an embodiment of the present disclosure, the composition manner of CG-DFI is agreed through the protocol, thus, the network device 102 and the user device 101 may determine the composition manner of CG-DFI unilaterally based on the protocol.

An embodiment of the present disclosure provides a method for sending a CG-DFI. The method is performed by a network device 102, and includes:
determining a composition manner of CG-DFI, in which, a maximum uplink hybrid automatic repeat request (HARQ) process number corresponding to the composition manner is greater than 16, the composition manner corresponds to a first manner, in which a number of hybrid automatic repeat request feedback HARQ-ACK information included in the CG-DFI is equal to the maximum uplink HARQ process number; and
sending, to a user equipment, a CG-DFI conforming to the composition manner.

In an embodiment of the present disclosure, with expanding a capacity of the CG-DFI, the CG-DFI is caused to carry the HARQ-ACK information of all uplink HARQ processes. Therefore, in a situation where the maximum uplink HARQ process number is greater than 16, the HARQ-ACK information of all uplink HARQ processes is sent to the user equipment, enabling the user equipment 101 to obtain the HARQ-ACK information of all uplink HARQ processes.

In a possible specific example, the maximum uplink HARQ process number is 32. The CG-DFI includes 32 bits, and each bit corresponds to the HARQ-ACK information of one uplink HARQ process. Thus, the CG-DFI may reflect the HARQ-ACK information of all uplink HARQ processes.

In a possible specific example, the maximum uplink HARQ process number is 64. The CG-DFI includes 64 bits, and each bit corresponds to the HARQ-ACK information of one uplink HARQ process. Thus, the CG-DFI may reflect the HARQ-ACK information of all uplink HARQ processes.

In a possible specific example, the maximum uplink HARQ process number is 128. The CG-DFI includes 128 bits, and each bit corresponds to the HARQ-ACK information of one uplink HARQ process. Thus, the CG-DFI may reflect the HARQ-ACK information of all uplink HARQ processes.

In a possible specific example, the maximum uplink HARQ process number is 256. The CG-DFI includes 256 bits, and each bit corresponds to the HARQ-ACK information of one uplink HARQ process. Thus, the CG-DFI may reflect the HARQ-ACK information of all uplink HARQ processes.

An embodiment of the present disclosure provides a method for sending a CG-DFI. The method is performed by a network device 102, and includes:
determining a composition manner of CG-DFI, in which, a maximum uplink hybrid automatic repeat request (HARQ) process number corresponding to the composition manner is greater than 16, the composition manner corresponds to a second manner, in which a number of hybrid automatic repeat request feedback HARQ-ACK information included in the CG-DFI is greater than the maximum uplink HARQ process number; and
sending, to a user equipment, a CG-DFI conforming to the composition manner.

In an embodiment of the present disclosure, with expanding a capacity of the CG-DFI, the CG-DFI is caused to carry the HARQ-ACK information of all uplink HARQ processes. Therefore, in a situation where the maximum uplink HARQ process number is greater than 16, the HARQ-ACK information of all uplink HARQ processes is sent to the user equipment, enabling the user equipment 101 to obtain the HARQ-ACK information of all uplink HARQ processes.

In a possible specific example, the maximum uplink HARQ process number is 32. The CG-DFI includes 64 bits, and each bit in the first 32 bits corresponds to the HARQ-ACK information of one uplink HARQ process. Thus, the CG-DFI may reflect the HARQ-ACK information of all uplink HARQ processes.

In a possible specific example, the maximum uplink HARQ process number is 64. The CG-DFI includes 128 bits, and each bit in the first 64 bits corresponds to the HARQ-ACK information of one uplink HARQ process. Thus, the CG-DFI may reflect the HARQ-ACK information of all uplink HARQ processes.

In a possible specific example, the maximum uplink HARQ process number is 128. The CG-DFI includes 256 bits, and each bit in the first 128 bits corresponds to the HARQ-ACK information of one uplink HARQ process. Thus, the CG-DFI may reflect the HARQ-ACK information of all uplink HARQ processes.

An embodiment of the present disclosure provides a method for sending a CG-DFI. The method is performed by a network device 102, and includes:
determining a composition manner of CG-DFI, in which, a maximum uplink hybrid automatic repeat request (HARQ) process number corresponding to the composition manner is greater than 16, the composition manner corresponds to a third manner, in which a number of hybrid automatic repeat request feedback HARQ-ACK information included in the CG-DFI is less than the maximum uplink HARQ process number, each hybrid automatic repeat request feedback HARQ-ACK information included in the CG-DFI corresponds to one logical value, and the logical value corresponds to a result of a logical operation of HARQ-ACK information of more than one uplink HARQ process; and
sending, to a user equipment, a CG-DFI conforming to the composition manner.

In an embodiment of the present disclosure, the HARQ-ACK information of more than one uplink HARQ process is compressed into one logical value after the logical operation, such that the logical value represents the HARQ-ACK information of the more than one uplink HARQ process. Therefore, when the number of the hybrid automatic repeat request feedback HARQ-ACK information includes in the CG-DFI is less than the maximum uplink HARQ process number, the HARQ-ACK information of all uplink HARQ processes corresponding to the maximum uplink HARQ process number may still be reflected.

In a possible embodiment, the CG-DFI includes at least two HARQ-ACK information. Different HARQ-ACK information in two HARQ-ACK information correspond to different numbers of uplink HARQ processes.

In a possible specific example, the maximum uplink HARQ process number is 64. The CG-DFI includes 16 bits. Each bit of the first 8 bits corresponds to a logical value of 2 uplink HARQ processes, and each bit of the last 8 bits corresponds to a logical value of 6 uplink HARQ processes.

An embodiment of the present disclosure provides a method for sending a CG-DFI. The method is performed by a network device 102, and includes:
determining a composition manner of CG-DFI, in which, a maximum uplink hybrid automatic repeat request (HARQ) process number corresponding to the composition manner is greater than 16, the composition manner corresponds to a third manner, in which a number of hybrid automatic repeat request feedback HARQ-ACK information included in the CG-DFI is less than the maximum uplink HARQ process number, each hybrid automatic repeat request feedback HARQ-ACK information included in the CG-DFI corresponds to one logical value, and the logical value corresponds to a result of a logical operation of HARQ-ACK information of more than one uplink HARQ process; and
sending, to a user equipment, a CG-DFI conforming to the composition manner.

In a possible embodiment, the CG-DFI includes at least two HARQ-ACK information. Different HARQ-ACK information in two HARQ-ACK information correspond to different numbers of uplink HARQ processes.

In a possible specific example, the maximum uplink HARQ process number is 64. The CG-DFI includes 16 bits. Each bit of the first 8 bits corresponds to a result of a logic AND operation on 2 uplink HARQ processes, and each bit of the last 8 bits corresponds to a result of a logic AND operation on 6 uplink HARQ processes.

An embodiment of the present disclosure provides a method for sending a CG-DFI. The method is performed by a network device 102, and includes:
determining a composition manner of CG-DFI, in which, a maximum uplink hybrid automatic repeat request (HARQ) process number corresponding to the composition manner is greater than 16, the composition manner corresponds to a fourth manner, in which a number of hybrid automatic repeat request feedback HARQ-ACK information included in the CG-DFI is less than the maximum uplink HARQ process number, each hybrid automatic repeat request feedback HARQ-ACK information included in the CG-DFI corresponds to one logical value, and each logical value corresponds to a result of a logical operation of HARQ-ACK information for N uplink HARQ processes, where N is a ratio of the maximum uplink HARQ process number to 16, and is an integer greater than 0; and
sending, to a user equipment, a CG-DFI conforming to the composition manner.

In an embodiment of the present disclosure, the HARQ-ACK information of each N uplink HARQ processes is compressed into one logical value after the logical operation, such that each logical value represents the HARQ-ACK information of N uplink HARQ processes. Therefore, when the number of hybrid automatic repeat request feedback HARQ-ACK information included in the CG-DFI is less than the maximum uplink HARQ process number, the HARQ-ACK information of all uplink HARQ processes corresponding to the maximum uplink HARQ process number may still be reflected.

In a possible embodiment, the maximum uplink HARQ process number is 32. The CG-DFI includes 16 bits. Each bit corresponds to a logical value of 2 uplink HARQ processes.

In a possible specific example, the maximum uplink HARQ process number is 64. The CG-DFI includes 16 bits. Each bit corresponds to a logical value of 4 uplink HARQ processes.

In a possible specific example, the maximum uplink HARQ process number is 128. The CG-DFI includes 16 bits. Each bit corresponds to a logical value of 8 uplink HARQ processes.

An embodiment of the present disclosure provides a method for sending a CG-DFI. The method is performed by a network device 102, and includes:
determining a composition manner of CG-DFI, in which, a maximum uplink hybrid automatic repeat request (HARQ) process number corresponding to the composition manner is greater than 16, the composition manner corresponds to a fourth manner, in which a number of hybrid automatic repeat request feedback HARQ-ACK information included in the CG-DFI is less than the maximum uplink HARQ process number, each hybrid automatic repeat request feedback HARQ-ACK information included in the CG-DFI corresponds to one logical value, and each logical value corresponds to a result of a logical operation of HARQ-ACK information for N uplink HARQ processes, where N is a ratio of the maximum uplink HARQ process number to 16, and is an integer greater than 0; and
sending, to a user equipment, a CG-DFI conforming to the composition manner.

In a possible embodiment, the maximum uplink HARQ process number is 32. The CG-DFI includes 16 bits. Each bit corresponds to a result of a logic AND operation on 2 uplink HARQ processes.

In a possible specific example, the maximum uplink HARQ process number is 64. The CG-DFI includes 16 bits. Each bit corresponds to a result of a logic AND operation on 4 uplink HARQ processes.

In a possible specific example, the maximum uplink HARQ process number is 128. The CG-DFI includes 16 bits. Each bit corresponds to a result of a logic AND operation on 8 uplink HARQ processes.

An embodiment of the present disclosure provides a method for sending a CG-DFI. The method is performed by a network device 102, and includes:
determining a composition manner of CG-DFI, in which, a maximum uplink hybrid automatic repeat request (HARQ) process number corresponding to the composition manner is greater than 16, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers; and
sending, to a user equipment, a CG-DFI conforming to the composition manner.

In an embodiment of the present disclosure, when the number of all HARQ-ACK information included in the CG-DFI is less than the maximum uplink HARQ process number, the CG-DFI is configured to represent the HARQ-ACK information of a portion of all uplink HARQ processes corresponding to the maximum uplink HARQ process number. The HARQ-ACK information of this portion of uplink HARQ processes may be the more important uplink HARQ processes among all uplink HARQ processes, Thus, effective feedback was provided to the utmost extent for all uplink HARQ processes corresponding to the maximum uplink HARQ process number.

In a possible example, the maximum uplink HARQ process number is 64. The CG-DFI includes 16 HARQ-ACK bits. These 16 HARQ-ACK bits correspond to the first 16 uplink HARQ processes among the 64 uplink HARQ processes, that is, these 16 HARQ-ACK bits correspond to the first 16 uplink HARQ processes among the 64 uplink HARQ processes in sequence. The details may be as follows:
the first HARQ-ACK bit corresponds to the first uplink HARQ process among the 64 uplink HARQ processes;
the second HARQ-ACK bit corresponds to the second uplink HARQ process among the 64 uplink HARQ processes,
the third HARQ-ACK bit corresponds to the third uplink HARQ process among the 64 uplink HARQ processes,
by analogy;
the 16th HARQ-ACK bit corresponds to the 16th uplink HARQ process among the 64 uplink HARQ processes.

An embodiment of the present disclosure provides a method for sending a CG-DFI. The method is performed by a network device 102, and includes:
determining a composition manner of CG-DFI, in which, a maximum uplink hybrid automatic repeat request (HARQ) process number corresponding to the composition manner is greater than 16, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers, and in the fifth manner, the CG-DFI includes an information field configured to indicate a minimum identifier among identifiers of the uplink HARQ processes corresponding to all HARQ-ACK information included in the CG-DFI; and
sending, to a user equipment, a CG-DFI conforming to the composition manner.

In a possible embodiment, the information field is configured to indicate an identifier of the uplink HARQ process corresponding to the first HARQ-ACK information in the CG-DFI.

In a possible example, the CG-DFI includes 20 bits, with the first 16 bits corresponding to the first HARQ-ACK information to the 16th HARQ-ACK information, and the last 4 bits being the information field configured to indicate the identifier of the uplink HARQ process corresponding to the first HARQ-ACK information.

In an embodiment of the present disclosure, the information field is set in the CG-DFI, and the information field is used to indicate an identifier of a starting uplink HARQ process in ascending order, and the HARQ-ACK information of a plurality of continuous uplink HARQ processes starting from the identifier of the starting uplink HARQ process is indicated in the CG-DFI. Therefore, the user equipment 101 may clearly know the HARQ-ACK information of which uplink HARQ processes is fed back in the CG-DFI.

In a possible specific example, the maximum uplink HARQ process number is 64, and the corresponding 64 uplink HARQ processes have identifiers ranging from 0 to 63. The CG-DFI includes 16 HARQ-ACK bits and one information field. The identifier of the uplink HARQ process indicated in the information field is 0, and the identifier indicated in the information field is defaulted as the minimum identifier among the identifiers of the uplink HARQ processes corresponding to all HARQ-ACK information included in the CG-DFI.

Thus, the 16 HARQ-ACK bits included in the CG-DFI sequentially represent HARQ-ACK information of uplink HARQ processes identified as 0 to 15.

An embodiment of the present disclosure provides a method for sending a CG-DFI. The method is performed by a network device 102, and includes:
determining a composition manner of CG-DFI, in which, a maximum uplink hybrid automatic repeat request (HARQ) process number corresponding to the composition manner is greater than 16, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers, and in the fifth manner, the CG-DFI includes an information field configured to indicate a maximum identifier among identifiers of the uplink HARQ processes corresponding to all HARQ-ACK information included in the CG-DFI; and
sending, to a user equipment, a CG-DFI conforming to the composition manner.

In a possible embodiment, the information field is configured to indicate an identifier of the uplink HARQ process corresponding to the first HARQ-ACK information in the CG-DFI.

In an embodiment of the present disclosure, the information field is set in the CG-DFI, and the information field is used to indicate an identifier of a starting uplink HARQ process in descending order, and the HARQ-ACK information of a plurality of continuous uplink HARQ processes starting from the identifier of the starting uplink HARQ process is indicated in the CG-DFI. Therefore, the user equipment 101 may clearly know the HARQ-ACK information of which uplink HARQ processes is fed back in the CG-DFI.

In a possible specific example, the maximum uplink HARQ process number is 64, and the corresponding 64 uplink HARQ processes have identifiers ranging from 0 to 63. The CG-DFI includes 16 HARQ-ACK bits and one information field. The identifier of the uplink HARQ process indicated in the information field is 63, and the identifier indicated in the information field is defaulted as the maximum identifier among the identifiers of the uplink HARQ processes corresponding to all HARQ-ACK information included in the CG-DFI.

Thus, the 16 HARQ-ACK bits included in the CG-DFI sequentially represent HARQ-ACK information of uplink HARQ processes identified as 63 to 48.

An embodiment of the present disclosure provides a method for sending a CG-DFI. The method is performed by a network device 102, and includes:
sending a wireless link layer signaling to a user equipment, in which the wireless link layer signaling includes second indication information, and the second indication information is configured to indicate that the CG-DFI does not comprise an information field configured to indicate a minimum identifier among identifiers of the uplink HARQ processes corresponding to all HARQ-ACK information included in the CG-DFI;
sending, to a user equipment, a CG-DFI conforming to the composition manner, in which, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers, and all HARQ-ACK information included the CG-DFI corresponds to continuous uplink HARQ processes starting from an uplink HARQ process with the minimum identifier among all uplink HARQ processes with the maximum uplink HARQ process number.

In an embodiment of the present disclosure, when the network device 102 indicates to the user device 101 through the wireless link layer signaling that the CG-DFI does not include the information field, it indicates that all HARQ-ACK information included in the CG-DFI corresponds to the continuous uplink HARQ processes starting from the uplink HARQ process with the minimum identifier among all uplink HARQ processes with the maximum uplink HARQ process number.

An embodiment of the present disclosure provides a method for sending a CG-DFI. The method is performed by a network device 102, and includes:
sending a wireless link layer signaling to a user equipment, in which, the wireless link layer signaling includes first indication information and second indication information;
the first indication information is configured to indicate that the composition manner of CG-DFI corresponds to a fifth manner, in the fifth manner, all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers;
the second indication information is configured to indicate that the CG-DFI does not comprise an information field configured to indicate a minimum identifier among identifiers of the uplink HARQ processes corresponding to all HARQ-ACK information included in the CG-DFI;
sending, to a user equipment, a CG-DFI conforming to the composition manner, in which, all HARQ-ACK information included the CG-DFI corresponds to continuous uplink HARQ processes starting from an uplink HARQ process with the minimum identifier among all uplink HARQ processes with the maximum uplink HARQ process number.

An embodiment of the present disclosure provides a method for sending a CG-DFI. The method is performed by a network device 102, and includes:
sending a wireless link layer signaling to a user equipment, in which, the wireless link layer signaling includes a number of uplink HARQ processes corresponding to all HARQ-ACK information included in the CG-DF;
determining a composition manner of CG-DFI, in which, a maximum uplink hybrid automatic repeat request (HARQ) process number corresponding to the composition manner is greater than 16, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers;
sending, to a user equipment, a CG-DFI conforming to the composition manner.

An embodiment of the present disclosure provides a method for sending a CG-DFI. The method is performed by a network device 102, and includes:
sending a wireless link layer signaling to a user equipment, in which, the wireless link layer signaling includes a number of uplink HARQ processes corresponding to all HARQ-ACK information included in the CG-DF;
determining a composition manner of CG-DFI, in which, a maximum uplink hybrid automatic repeat request (HARQ) process number corresponding to the composition manner is greater than 16, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers, and in the fifth manner, the CG-DFI includes an information field configured to indicate a maximum identifier among identifiers of the uplink HARQ processes corresponding to all HARQ-ACK information included in the CG-DFI;
sending, to a user equipment, a CG-DFI conforming to the composition manner.

An embodiment of the present disclosure provides a method for sending a CG-DFI. The method is performed by a user equipment 101, and includes:
receiving, from a network device, a CG-DFI conforming to a composition manner, in which, a maximum uplink hybrid automatic repeat request (HARQ) process number corresponding to the composition manner is greater than 16.

An embodiment of the present disclosure provides a method for sending a CG-DFI. The method is performed by a user equipment 101, and includes:
receiving a wireless link layer signaling from the network device, in which the wireless link layer signaling includes first indication information configured to indicate the composition manner of CG-DFI; and
receiving, from a network device, a CG-DFI conforming to a composition manner, in which, a maximum uplink hybrid automatic repeat request (HARQ) process number corresponding to the composition manner is greater than 16.

An embodiment of the present disclosure provides a method for sending a CG-DFI. The method is performed by a user equipment 101, and includes:
receiving, from a network device, a CG-DFI conforming to a composition manner, in which, a maximum uplink hybrid automatic repeat request (HARQ) process number corresponding to the composition manner is greater than 16, the composition manner is a composition manner of CG-DFI which is agreed in a protocol.

An embodiment of the present disclosure provides a method for sending a CG-DFI. The method is performed by a user equipment 101, and includes:
receiving, from a network device, a CG-DFI conforming to a composition manner, in which, a maximum uplink hybrid automatic repeat request (HARQ) process number corresponding to the composition manner is greater than 16, the composition manner corresponds to a first manner, in which a number of hybrid automatic repeat request feedback (HARQ-ACK) information included in the CG-DFI is equal to the maximum uplink HARQ process number.

An embodiment of the present disclosure provides a method for sending a CG-DFI. The method is performed by a user equipment 101, and includes:
receiving, from a network device, a CG-DFI conforming to a composition manner, in which, a maximum uplink hybrid automatic repeat request (HARQ) process number corresponding to the composition manner is greater than 16, the composition manner corresponds to a second manner, in which a number of hybrid automatic repeat request feedback (HARQ-ACK) information included in the CG-DFI is greater than the maximum uplink HARQ process number.

An embodiment of the present disclosure provides a method for sending a CG-DFI. The method is performed by a user equipment 101, and includes:
receiving, from a network device, a CG-DFI conforming to a composition manner, in which, a maximum uplink hybrid automatic repeat request (HARQ) process number corresponding to the composition manner is greater than 16, the composition manner corresponds to a third manner, in which a number of hybrid automatic repeat request feedback (HARQ-ACK) information included in the CG-DFI is less than the maximum uplink HARQ process number, each hybrid automatic repeat request feedback (HARQ-ACK) information included in the CG-DFI corresponds to one logical value, and the logical value corresponds to a result of a logical operation of HARQ-ACK information of more than one uplink HARQ process.

An embodiment of the present disclosure provides a method for sending a CG-DFI. The method is performed by a user equipment 101, and includes:
receiving, from a network device, a CG-DFI conforming to a composition manner, in which, a maximum uplink hybrid automatic repeat request (HARQ) process number corresponding to the composition manner is greater than 16, the composition manner corresponds to a fourth manner, in which a number of hybrid automatic repeat request feedback (HARQ-ACK) information included in the CG-DFI is less than the maximum uplink HARQ process number, each hybrid automatic repeat request feedback (HARQ-ACK) information included in the CG-DFI corresponds to one logical value, and each logical value corresponds to a result of a logical operation of HARQ-ACK information for N uplink HARQ processes, where N is a ratio of the maximum uplink HARQ process number to 16, and is an integer greater than 0.

An embodiment of the present disclosure provides a method for sending a CG-DFI. The method is performed by a user equipment 101, and includes:
receiving, from a network device, a CG-DFI conforming to a composition manner, in which, a maximum uplink hybrid automatic repeat request (HARQ) process number corresponding to the composition manner is greater than 16, the composition manner corresponds to a third manner, in which a number of hybrid automatic repeat request feedback (HARQ-ACK) information included in the CG-DFI is less than the maximum uplink HARQ process number, each hybrid automatic repeat request feedback (HARQ-ACK) information included in the CG-DFI corresponds to one logical value, and the logical value corresponds to a result of a logic AND operation of HARQ-ACK information of more than one uplink HARQ process.

An embodiment of the present disclosure provides a method for sending a CG-DFI. The method is performed by a user equipment 101, and includes:
receiving, from a network device, a CG-DFI conforming to a composition manner, in which, a maximum uplink hybrid automatic repeat request (HARQ) process number corresponding to the composition manner is greater than 16, the composition manner corresponds to a fourth manner, in which a number of hybrid automatic repeat request feedback (HARQ-ACK) information included in the CG-DFI is less than the maximum uplink HARQ process number, each hybrid automatic repeat request feedback (HARQ-ACK) information included in the CG-DFI corresponds to one logical value, and each logical value corresponds to a result of a logic AND operation of HARQ-ACK information for N uplink HARQ processes, where N is a ratio of the maximum uplink HARQ process number to 16, and is an integer greater than 0.

An embodiment of the present disclosure provides a method for sending a CG-DFI. The method is performed by a user equipment 101, and includes:
receiving, from a network device, a CG-DFI conforming to a composition manner, in which, a maximum uplink hybrid automatic repeat request (HARQ) process number corresponding to the composition manner is greater than 16, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers.

An embodiment of the present disclosure provides a method for sending a CG-DFI. The method is performed by a user equipment 101, and includes:
receiving, from a network device, a CG-DFI conforming to a composition manner, in which, a maximum uplink hybrid automatic repeat request (HARQ) process number corresponding to the composition manner is greater than 16, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers, and in the fifth manner, the CG-DFI includes an information field configured to indicate a minimum identifier among identifiers of the uplink HARQ processes corresponding to all HARQ-ACK information included in the CG-DFI.

An embodiment of the present disclosure provides a method for sending a CG-DFI. The method is performed by a user equipment 101, and includes:
receiving, from a network device, a CG-DFI conforming to a composition manner, in which, a maximum uplink hybrid automatic repeat request (HARQ) process number corresponding to the composition manner is greater than 16, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers, and in the fifth manner, the CG-DFI includes an information field configured to indicate a maximum identifier among identifiers of the uplink HARQ processes corresponding to all HARQ-ACK information included in the CG-DFI.

An embodiment of the present disclosure provides a method for sending a CG-DFI. The method is performed by a user equipment 101, and includes:
receiving a wireless link layer signaling from a network device, in which the wireless link layer signaling includes second indication information, and the second indication information is configured to indicate that the CG-DFI does not comprise an information field configured to indicate a minimum identifier among identifiers of the uplink HARQ processes corresponding to all HARQ-ACK information included in the CG-DFI;
receiving, from a network device, a CG-DFI conforming to a composition manner, in which, a maximum uplink hybrid automatic repeat request (HARQ) process number corresponding to the composition manner is greater than 16, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers, and all HARQ-ACK information included the CG-DFI corresponds to continuous uplink HARQ processes starting from an uplink HARQ process with the minimum identifier among all uplink HARQ processes with the maximum uplink HARQ process number.

An embodiment of the present disclosure provides a method for sending a CG-DFI. The method is performed by a user equipment 101, and includes:
receiving a wireless link layer signaling from a network device, in which the wireless link layer signaling includes a number of uplink HARQ processes corresponding to all HARQ-ACK information included in the CG-DFI;
receiving, from a network device, a CG-DFI conforming to a composition manner, in which, a maximum uplink hybrid automatic repeat request (HARQ) process number corresponding to the composition manner is greater than 16, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers.

An embodiment of the present disclosure provides a method for sending a CG-DFI. The method is performed by a user equipment 101, and includes:
receiving a wireless link layer signaling from a network device, in which the wireless link layer signaling includes a number of uplink HARQ processes corresponding to all HARQ-ACK information included in the CG-DFI;
receiving, from a network device, a CG-DFI conforming to a composition manner, in which, a maximum uplink hybrid automatic repeat request (HARQ) process number corresponding to the composition manner is greater than 16, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers, and in the fifth manner, the CG-DFI includes an information field configured to indicate a minimum identifier among identifiers of the uplink HARQ processes corresponding to all HARQ-ACK information included in the CG-DFI. Based on the same concept as the above method embodiments, an embodiment of the present disclosure provides a communication device. The communication device has functions of the network device 102 in the above method embodiments and may be configured to execute the steps performed by the network device 102 in the above method embodiments. The functions may be implemented through hardware, or through software or executing corresponding software by the hardware. The hardware or software includes one or more modules corresponding to the above functions.

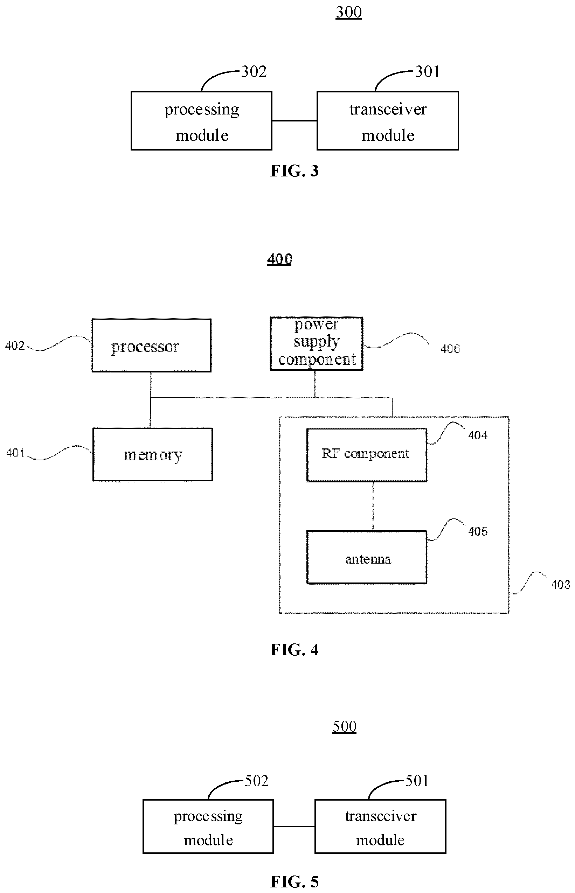

In a possible implementation, the communication device 300 shown in FIG. 3 may be served as the network device in the above method embodiments and execute the steps performed by the network device in the above method embodiments. As shown in FIG. 3, the communication device 300 may include a transceiver module 301 and a processing module 302. The transceiver module 301 and the processing module 302 are coupled with each other. The transceiver module 301 may be configured to support communication of the communication device 300, and the transceiver module 301 may a have wireless communication function, such as wirelessly communicating with other communication devices through radio air ports. The processing module 302 may be configured to support the communication device 300 in performing the processing actions in the above method embodiments, including but not limited to: generating information and messages sent by the transceiver module 301, and/or demodulating and decoding signals received by the transceiver module 301, and the like.

When executing the steps implemented by the network device 102, the processing module 302 is configured to determine a composition manner of CG-DFI, in which a maximum uplink hybrid automatic repeat request (HARQ) process number corresponding to the composition manner is greater than 16. The transceiver module 301 is configured to send, to a user equipment, a CG-DFI conforming to the composition manner.

Optionally, the transceiver module 301 is further configured to send a wireless link layer signaling to the user equipment, in which the wireless link layer signaling includes first indication information configured to indicate the composition manner of CG-DFI.

Optionally, determining the composition manner of CG-DFI includes:
determining the composition manner of CG-DFI agreed in a protocol.

Optionally, the composition manner corresponds to a first manner, in which a number of hybrid automatic repeat request feedback HARQ-ACK information included in the CG-DFI is equal to the maximum uplink HARQ process number.

Optionally, the composition manner corresponds to a second manner, in which a number of hybrid automatic repeat request feedback HARQ-ACK information included in the CG-DFI is greater than the maximum uplink HARQ process number.

Optionally, the composition manner corresponds to a third manner, in which a number of hybrid automatic repeat request feedback HARQ-ACK information included in the CG-DFI is less than the maximum uplink HARQ process number, each hybrid automatic repeat request feedback HARQ-ACK information included in the CG-DFI corresponds to one logical value, and the logical value corresponds to a result of a logical operation of HARQ-ACK information of more than one uplink HARQ process.

Optionally, the composition manner corresponds to a fourth manner, in which a number of hybrid automatic repeat request feedback HARQ-ACK information included in the CG-DFI is less than the maximum uplink HARQ process number, each hybrid automatic repeat request feedback HARQ-ACK information included in the CG-DFI corresponds to one logical value, and each logical value corresponds to a result of a logical operation of HARQ-ACK information for N uplink HARQ processes, where N is a ratio of the maximum uplink HARQ process number to 16, and is an integer greater than 0.

Optionally, the logical operation is a logic AND operation.

Optionally, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers.

Optionally, in the fifth manner, the CG-DFI includes an information field. The information field is configured to indicate an identifier of an uplink HARQ process corresponding to a first HARQ-ACK information in the CG-DFI, and an identifier indicated by the information field is a minimum identifier among identifiers of the uplink HARQ processes corresponding to all HARQ-ACK information included in the CG-DFI, or a maximum identifier among identifiers of the uplink HARQ processes corresponding to all HARQ-ACK information included in the CG-DFI.

Optionally, the transceiver module 301 is further configured to send a wireless link layer signaling to a user equipment, in which the wireless link layer signaling includes second indication information, and the second indication information is configured to indicate that the CG-DFI does not comprise an information field, and the information field is configured to indicate an identifier of an uplink HARQ process corresponding to a first HARQ-ACK information in the CG-DFI, and an identifier indicated by the information field is a minimum identifier among identifiers of the uplink HARQ processes corresponding to all HARQ-ACK information included in the CG-DFI, or a maximum identifier among identifiers of the uplink HARQ processes corresponding to all HARQ-ACK information included in the CG-DFI;
all HARQ-ACK information included the CG-DFI corresponds to continuous uplink HARQ processes starting from an uplink HARQ process with the minimum identifier among all uplink HARQ processes with the maximum uplink HARQ process number.

When the communication device is a network device 102, a structure of the network device 102 may also be shown in FIG. 4. Taking a base station as an example to illustrate the structure of the communication device. As shown in FIG. 4, the device 400 includes a memory 401, a processor 402, a transceiver component 403, and a power supply component 406. The memory 401 is coupled with the processor 402 and may be configured to store programs and data necessary for the communication device 400 to achieve various functions. The processor 402 is configured to support the communication device 400 in executing the corresponding functions in the above method, which can be achieved by calling the programs stored in the memory 401. The transceiver component 403 may be a wireless transceiver and may be configured to support the communication device 400 in receiving signaling and/or data, as well as sending signaling and/or data, through radio air ports. The transceiver component 403 may also be referred to as a transceiver unit or a communication unit. The transceiver component 403 may include a radio frequency (RF) component 404 and one or more antennas 405. The radio frequency component 404 may be a remote radio unit (RRU), which may be used for transmission of radio frequency signals and conversion between radio frequency signals to baseband signals. The one or more antennas 405 may be used for radiation and reception of the radio frequency signals.

When the communication device 400 is to be sent data, the processor 402 may perform baseband processing on data to be sent and then output a baseband signal to the radio frequency unit. The radio frequency unit processes the baseband signal and sends the processed baseband signal in a form of electromagnetic waves through the antenna. When data is sent to the communication device 400, the radio frequency unit receives the radio frequency signal through the antenna, converts the radio frequency signal into the baseband signal, and outputs the processed baseband signal to the processor 402. The processor 402 converts the received baseband signal into data and processes the data.

Based on the same concept as the above method embodiments, an embodiment of the present disclosure provides a communication device. The communication device has functions of the user equipment 101 in the above method embodiments and may be configured to execute the steps performed by user equipment 101 in the above method embodiments. The functions may be implemented through hardware, or through software or executing corresponding software by the hardware. The hardware or software includes one or more modules corresponding to the above functions.

In a possible implementation, the communication device 500 shown in FIG. 5 may be served as the user equipment in the above method embodiments and execute the steps performed by the user equipment in the above method embodiments. As shown in FIG. 5, the communication device 500 may include a transceiver module 501 and a processing module 502. The transceiver module 501 and the processing module 502 are coupled with each other. The transceiver module 501 may be configured to support communication of the communication device 500, and the transceiver module 501 may a have wireless communication function, such as wirelessly communicating with other communication devices through radio air ports. The processing module 502 may be configured to support the communication device 500 in performing the processing actions in the above method embodiments, including but not limited to: generating information and messages sent by the transceiver module 501, and/or demodulating and decoding signals received by the transceiver module 501, and the like.

When executing the steps implemented by the user equipment 101, the transceiver module 501 is configured to receive, from a network device, a CG-DFI conforming to a composition manner, in which, a maximum uplink hybrid automatic repeat request (HARQ) process number corresponding to the composition manner is greater than 16.

Optionally, the transceiver module 501 is further configured to receive a wireless link layer signaling from the network device, in which the wireless link layer signaling includes first indication information configured to indicate the composition manner of CG-DFI.

Optionally, the composition manner is a composition manner of CG-DFI which is agreed in a protocol.

Optionally, the composition manner corresponds to a first manner, in which a number of hybrid automatic repeat request feedback HARQ-ACK information included in the CG-DFI is equal to the maximum uplink HARQ process number.

Optionally, the composition manner corresponds to a second manner, in which a number of hybrid automatic repeat request feedback HARQ-ACK information included in the CG-DFI is greater than the maximum uplink HARQ process number.

Optionally, the composition manner corresponds to a third manner, in which a number of hybrid automatic repeat request feedback HARQ-ACK information included in the CG-DFI is less than the maximum uplink HARQ process number, each hybrid automatic repeat request feedback HARQ-ACK information included in the CG-DFI corresponds to one logical value, and the logical value corresponds to a result of a logical operation of HARQ-ACK information of more than one uplink HARQ process.

Optionally, the composition manner corresponds to a fourth manner, in which a number of hybrid automatic repeat request feedback HARQ-ACK information included in the CG-DFI is less than the maximum uplink HARQ process number, each hybrid automatic repeat request feedback HARQ-ACK information included in the CG-DFI corresponds to one logical value, and each logical value corresponds to a result of a logical operation of HARQ-ACK information for N uplink HARQ processes, where N is a ratio of the maximum uplink HARQ process number to 16, and is an integer greater than 0.

Optionally, the logical operation is a logic AND operation.

Optionally, the composition manner corresponds to a fifth manner, in which all HARQ-ACK information included in the CG-DFI corresponds to a portion of uplink HARQ processes among all the uplink HARQ processes with the maximum uplink HARQ process number, and the portion of uplink HARQ processes are uplink HARQ processes with continuous identifiers.

Optionally, in the fifth manner, the CG-DFI includes an information field. The information field is configured to indicate an identifier of an uplink HARQ process corresponding to a first HARQ-ACK information in the CG-DFI, and an identifier indicated by the information field is a minimum identifier among identifiers of the uplink HARQ processes corresponding to all HARQ-ACK information included in the CG-DFI, or a maximum identifier among identifiers of the uplink HARQ processes corresponding to all HARQ-ACK information included in the CG-DFI.

Optionally, the transceiver module 501 is further configured to receive a wireless link layer signaling from a network device, in which the wireless link layer signaling includes second indication information, and the second indication information is configured to indicate that the CG-DFI does not comprise an information field, and the information field is configured to indicate an identifier of an uplink HARQ process corresponding to a first HARQ-ACK information in the CG-DFI, and an identifier indicated by the information field is a minimum identifier among identifiers of the uplink HARQ processes corresponding to all HARQ-ACK information included in the CG-DFI, or a maximum identifier among identifiers of the uplink HARQ processes corresponding to all HARQ-ACK information included in the CG-DFI;
all HARQ-ACK information included the CG-DFI corresponds to continuous uplink HARQ processes starting from an uplink HARQ process with the minimum identifier among all uplink HARQ processes with the maximum uplink HARQ process number.

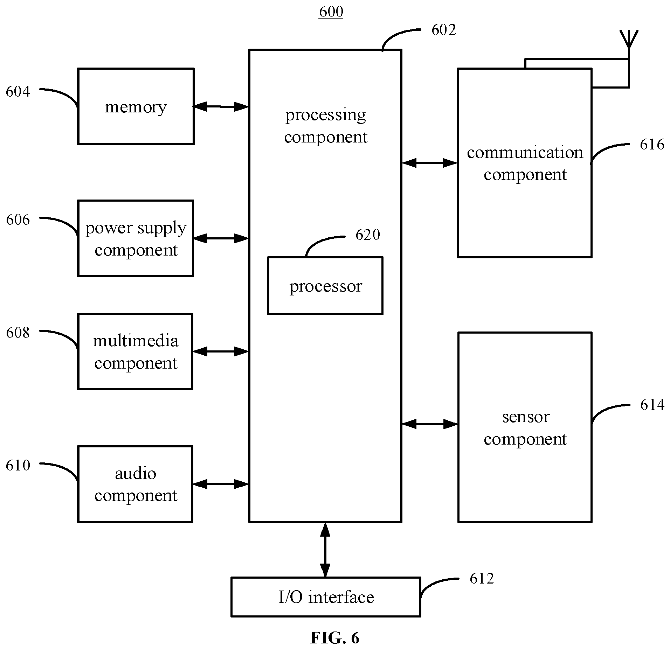

When the communication device is a user equipment 101, a structure of the user equipment 101 may also be shown in FIG. 6. The device 600 may be a mobile phone, a computer, a digital broadcasting terminal, a messaging device, a game console, a tablet device, a medical equipment, a fitness equipment, a personal digital assistant, etc.

As illustrated in FIG. 6, the device 600 may include one or more components: a processing component 602, a memory 604, a power supply component 606, a multimedia component 608, an audio component 610, an input/output (I/O) interface 612, a sensor component 614, and a communication component 616.

The processing component 602 generally controls the whole operation of the device 600, such as operations related to display, phone call, data communication, camera operation and recording operation. The processing component 602 may include one or more processors 620 to perform instructions, to complete all or part of steps of the above method. In addition, the processing component 602 may include one or more modules for the convenience of interaction between the processing component 602 and other components. For example, the processing component 602 may include a multimedia module for the convenience of interaction between the multimedia component 608 and the processing component 602.

The memory 604 is configured to store all types of data to support the operation of the device 600. Examples of the data include the instructions of any applications or methods operated on the device 600, contact data, phone book data, messages, pictures, videos, etc. The memory 604 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 606 may provide power supply for all components of the device 600. The power supply component 606 may include a power supply management system, one or more power supplies, and other units related to generating, managing and distributing power for the device 600.

The multimedia component 608 includes an output interface screen provided between the device 600 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 608 includes a front camera and/or a rear camera. When the device 600 is in an operation mode, such as a shooting mode or a video mode, the front camera or the rear camera may receive external multimedia data. Each front camera and rear camera may be a fixed optical lens system or an optical lens system with a focal length and an optical zoom capacity.

The audio component 610 is configured as an output and/or input signal. For example, the audio component 610 includes a microphone (MIC). When the device 600 is in operation mode, such as call mode, record mode, and speech recognition mode, the microphone is configured to receive external audio signals. The audio signals received may be further stored in the memory 604 or sent via the communication component 616. In some embodiments, the audio component 610 further includes a speaker configured to output an audio signal.

The I/O interface 612 provides an interface for the processing component 602 and the peripheral interface module, and the peripheral interface module may be a keyboard, a click wheel, a button, etc. The buttons may include but not limited to a home button, a volume button, a start button and a lock button.

The sensor component 614 includes one or more sensors, configured to provide various aspects of status assessment for the device 600. For example, the sensor component 614 may detect the on/off state of the device 600 and the relative positioning of the component. For example, the component is a display and a keypad of the device 600. The sensor component 614 may further detect the location change of the device 600 or one component of the device 600, the presence or absence of contact between the user and the device 600, the orientation or acceleration/deceleration of the device 600, and the temperature change of the device 600. The sensor component 614 may include a proximity sensor, which is configured to detect the existence of the objects nearby without any physical contact. The sensor component 614 may further include a light sensor such as CMOS or CCD image sensor, which is configured to use in imaging applications. In some embodiments, the sensor component 614 may further include an acceleration transducer, a gyroscope sensor, a magnetic sensor, a pressure sensor or a temperature sensor.

The communication component 616 is configured for the convenience of wire or wireless communication between the device 600 and other devices. The device 600 may access wireless networks based on a communication standard, such as Wi-Fi, 2G or 6G, or their combination. In an exemplary embodiment, the communication component 616 receives broadcast signals or broadcast-related information from an external broadcast management system via a broadcast channel. In an exemplary embodiment, the communication component 616 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In an exemplary embodiment, the device 600 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an exemplary embodiment, there is provided a non-transitory computer readable storage medium including instructions, such as the memory 604 including instructions. The instructions may be executed by the processor 620 of the device 600 to complete the above methods. For example, the non-transitory computer-readable storage medium may be a ROM, a random-access memory (RAM), a CD-ROM, a magnetic tape, a floppy disk, an optical data storage device, etc.

After considering the specification and practicing the disclosure here, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

### Industrial Applicability

For a situation where the maximum uplink HARQ process number is greater than 16, the corresponding composition method of the CG-DFI is set. The CG-DFI conforming to the composition manner is formed based on the composition manner, and the CG-DFI conforming to the composition manner is sent to the user equipment 101. Therefore, in application scenarios where the maximum uplink HARQ process number is greater than 16, the CG-DFI conforming to the composition manner may reflect HARQ-ACK information of all or part of the uplink HARQ processes corresponding to the maximum uplink HARQ process number.

## Claims

1. A method for sending configured grant-downlink feedback information, CG-DFI, performed by a network device, the method comprises
determining (S21) a composition manner of CG-DFI, wherein a maximum uplink hybrid automatic repeat request, HARQ, process number corresponding to the composition manner is greater than 16; and
sending (S22), to a user equipment, a CG-DFI conforming to the composition manner;
wherein, the composition manner corresponds to a first manner, in which a number of hybrid automatic repeat request feedback, HARQ-ACK, information comprised in the CG-DFI is equal to the maximum uplink HARQ process number.

2. The method according to claim 1, wherein determining (S21) the composition manner of CG-DFI comprises one of:
sending a wireless link layer signaling to the user equipment, wherein the wireless link layer signaling comprises first indication information configured to indicate the composition manner of CG-DFI; or
determining the composition manner of CG-DFI agreed in a protocol.

3. The method according to claim 1, further comprising:
sending a wireless link layer signaling to a user equipment, wherein the wireless link layer signaling comprises second indication information, and the second indication information is configured to indicate that the CG-DFI does not comprise an information field configured to indicate a minimum identifier among identifiers of the uplink HARQ processes corresponding to all HARQ-ACK information comprised in the CG-DFI;
wherein all HARQ-ACK information comprised the CG-DFI corresponds to continuous uplink HARQ processes starting from an uplink HARQ process with the minimum identifier among all uplink HARQ processes with the maximum uplink HARQ process number.

4. The method according to claim 1, further comprising:
sending a wireless link layer signaling to a user equipment, wherein the wireless link layer signaling comprises a number of uplink HARQ processes corresponding to all HARQ-ACK information comprised in the CG-DFI.

5. A method for receiving configured grant-downlink feedback information, CG-DFI, performed by a user equipment, the method comprises
receiving (S23), from a network device, a CG-DFI conforming to a composition manner, wherein a maximum uplink hybrid automatic repeat request, HARQ, process number corresponding to the composition manner is greater than 16; wherein, the composition manner corresponds to a first manner, in which a number of hybrid automatic repeat request feedback, HARQ-ACK, information comprised in the CG-DFI is equal to the maximum uplink HARQ process number.

6. The method according to claim 5, further comprising:
receiving a wireless link layer signaling from the network device, wherein the wireless link layer signaling comprises first indication information configured to indicate the composition manner of CG-DFI.

7. The method according to claim 5, wherein the composition manner is a composition manner of CG-DFI agreed in a protocol.

8. A communication device, comprising:
a processor (402); and
a memory (401) storing a computer program executable by the processor (402);
wherein the processor (402) is configured to execute the computer program to implement the method according to any one of claims 1 to 7.

9. A computer-readable storage medium stored with instructions, wherein, when the instructions are called and executed on a computer, the computer is caused to perform the method according to any one of claims 1 to 7.

## Patentansprüche

1. Verfahren zum Senden von konfigurierten Rückmeldeinformationen für die Gewährung von Downlink-Verbindungen, CG-DFI, das von einer Netzwerkvorrichtung durchgeführt wird, wobei das Verfahren die folgenden Schritte aufweist:
Bestimmen (S21) einer Zusammensetzungsart von CG-DFI, wobei eine der Zusammensetzungsart entsprechende maximale Uplink-Hybrid-Automatic-Repeat-Request, HARQ,-Prozesszahl größer als 16 ist; und
Senden (S22) eines CG-DFI, das der Zusammensetzungsart entspricht, an ein Benutzergerät;
wobei die Zusammensetzungsart einer ersten Art entspricht, bei der eine Anzahl von Hybrid-Automatic-Repeat-Request-Feedback, HARQ-ACK,-Informationen, die in dem CG-DFI enthalten sind, gleich der maximalen Uplink-HARQ-Prozesszahl ist.

2. Verfahren nach Anspruch 1, wobei das Bestimmen (S21) der Zusammensetzungsart von CG-DFI einen der folgenden Schritte aufweist:
Senden einer Drahtlos-Verbindungsschicht-Signalisierung an das Benutzergerät, wobei die Drahtlos-Verbindungsschicht-Signalisierung erste Anzeigeinformationen umfasst, die so konfiguriert sind, dass sie die Zusammensetzungsart von CG-DFI anzeigen; oder
Bestimmen der in einem Protokoll vereinbarte Zusammensetzungsart von CG-DFI.

3. Verfahren nach Anspruch 1, ferner mit dem Schritt:
Senden einer Drahtlos-Verbindungsschicht-Signalisierung an ein Benutzergerät, wobei die Drahtlos-Verbindungsschicht-Signalisierung zweite Anzeigeinformationen aufweist und die zweiten Anzeigeinformationen so konfiguriert sind, dass sie anzeigen, dass die CG-DFI kein Informationsfeld umfassen, das so konfiguriert ist, dass es eine minimale Kennung unter den Kennungen der Uplink-HARQ-Prozesse anzeigt, die allen in den CG-DFI enthaltenen HARQ-ACK-Informationen entsprechen;
wobei alle HARQ-ACK-Informationen, welche in den CG-DFI enthalten sind, kontinuierlichen Uplink-HARQ-Prozessen entsprechen, beginnend mit einem Uplink-HARQ-Prozess mit der minimalen Kennung unter allen Uplink-HARQ-Prozessen mit der maximalen Uplink-HARQ-Prozesszahl.

4. Verfahren nach Anspruch 1, ferner mit dem Schritt:
Senden einer Drahtlos-Verbindungsschicht-Signalisierung an ein Benutzergerät, wobei die Drahtlos-Verbindungsschicht-Signalisierung eine Anzahl von Uplink-HARQ-Prozessen aufweist, die allen in den CG-DFI enthaltenen HARQ-ACK-Informationen entsprechen.

5. Verfahren zum Empfangen von konfigurierten Rückmeldeinformationen für die Gewährung von Downlink-Verbindungen, CG-DFI, das von einer Netzwerkvorrichtung durchgeführt wird, wobei das Verfahren den folgenden Schritt aufweist:
Empfangen (S23) einer einer Zusammensetzungsart entsprechenden CG-DFI von einer Netzwerkvorrichtung, wobei die der Zusammensetzungsart entsprechende maximale Uplink-Hybrid-Automatic-Repeat-Request, HARQ,-Prozesszahl größer als 16 ist; wobei die Zusammensetzungsart einer ersten Art entspricht, bei der eine Anzahl von Hybrid-Automatic-Repeat-Request-Feedback, HARQ-ACK,-Informationen, die in dem CG-DFI enthalten sind, gleich der maximalen Uplink-HARQ-Prozesszahl ist.

6. Verfahren nach Anspruch 5, ferner mit dem Schritt:
Empfangen einer Drahtlos-Verbindungsschicht-Signalisierung von der Netzwerkvorrichtung, wobei die Drahtlos-Verbindungsschicht-Signalisierung erste Anzeigeinformationen umfasst, die so konfiguriert sind, dass sie die Zusammensetzungsart von CG-DFI anzeigen.

7. Verfahren nach Anspruch 5, wobei die Zusammensetzungsart eine in einem Protokoll vereinbarte Zusammensetzungsart von CG-DFI ist.

8. Kommunikationsvorrichtung mit:
einem Prozessor (402); und
einem Speicher (401), in dem ein von dem Prozessor (402) ausführbares Computerprogramm gespeichert ist;
wobei der Prozessor (402) dazu ausgebildet ist, das Computerprogramm auszuführen, um das Verfahren nach einem der Ansprüche 1 bis 7 zu implementieren.

9. Computerlesbares Speichermedium, auf dem Befehle gespeichert sind, wobei, wenn die Befehle auf einem Computer aufgerufen und ausgeführt werden, der Computer veranlasst wird, das Verfahren nach einem der Ansprüche 1 bis 7 durchzuführen.

## Revendications

1. Procédé pour envoyer des informations de rétroaction de liaison descendante d'autorisation configurée, dites CG-DFI, mis en œuvre par un dispositif de réseau, le procédé comprenant les étapes consistant à :
déterminer (S21) une manière de composition de CG-DFI, dans lequel un nombre de traitements de demande de répétition automatique hybride, dite HARQ, de liaison montante maximal correspondant à la manière de composition est supérieur à 16 ; et
envoyer (S22), à un équipement d'utilisateur, des CG-DFI conformes à la manière de composition ;
dans lequel, la manière de composition correspond à une première manière, dans laquelle un nombre d'informations de rétroaction de demande de répétition automatique hybride, dite HARQ-ACK, comprises dans les CG-DFI, est égal au nombre de traitements de HARQ de liaison montante maximal.

2. Procédé selon la revendication 1, dans lequel l'étape de détermination (S21) de la manière de composition de CG-DFI comprend l'une des étapes suivantes consistant à :
envoyer une signalisation de couche de liaison sans fil à l'équipement d'utilisateur, dans lequel la signalisation de couche de liaison sans fil comprend des premières informations d'indication configurées pour indiquer la manière de composition de CG-DFI ; ou
déterminer la manière de composition de CG-DFI convenue dans un protocole.

3. Procédé selon la revendication 1, comprenant en outre l'étape consistant à :
envoyer une signalisation de couche de liaison sans fil à un équipement d'utilisateur, dans lequel la signalisation de couche de liaison sans fil comprend des secondes informations d'indication, et les secondes informations d'indication sont configurées pour indiquer le fait que les CG-DFI ne comprennent pas de champ d'informations configuré pour indiquer un identificateur minimal parmi des identificateurs des traitements de HARQ de liaison montante correspondant à toutes les informations de HARQ-ACK comprises dans les CG-DFI ;
dans lequel toutes les informations de HARQ-ACK comprises dans les CG-DFI correspondent à des traitements de HARQ de liaison montante continus commençant à partir d'un traitement de HARQ de liaison montante ayant l'identificateur minimal parmi tous les traitements de HARQ de liaison montante ayant le nombre de traitements de HARQ de liaison montante maximal.

4. Procédé selon la revendication 1, comprenant en outre l'étape consistant à :
envoyer une signalisation de couche de liaison sans fil à un équipement d'utilisateur, dans lequel la signalisation de couche de liaison sans fil comprend un nombre de traitements de HARQ de liaison montante correspondant à toutes les informations de HARQ-ACK comprises dans les CG-DFI.

5. Procédé pour recevoir des informations de rétroaction de liaison descendante d'autorisation configurée, dites CG-DFI, mis en œuvre par un équipement d'utilisateur, le procédé comprenant les étapes consistant à :
recevoir (S23), en provenance d'un dispositif de réseau, des CG-DFI conformes à une manière de composition, dans lequel un nombre de traitements de demande de répétition automatique hybride, dite HARQ, de liaison montante maximal correspondant à la manière de composition est supérieur à 16 ; dans lequel, la manière de composition correspond à une première manière dans laquelle un nombre d'informations de rétroaction de demande de répétition automatique hybride, dite HARQ-ACK, comprises dans les informations de CG-DFI est égal au nombre de traitements de HARQ de liaison montante maximal.

6. Procédé selon la revendication 5, comprenant en outre l'étape consistant à :
recevoir une signalisation de couche de liaison sans fil en provenance du dispositif de réseau, dans lequel la signalisation de couche de liaison sans fil comprend des premières informations d'indication configurées pour indiquer la manière de composition de CG-DFI.

7. Procédé selon la revendication 5, dans lequel la manière de composition est une manière de composition de CG-DFI convenue dans un protocole.

8. Dispositif de communication, comprenant :
un processeur (402) ; et
une mémoire (401) maintenant un programme d'ordinateur exécutable par le processeur (402) ;
dans lequel le processeur (402) est configuré pour exécuter le programme d'ordinateur pour mettre en œuvre le procédé selon l'une quelconque des revendications 1 à 7.

9. Support d'informations lisible par ordinateur maintenant des instructions, dans lequel, lorsque les instructions sont appelées et exécutées sur un ordinateur, l'ordinateur est amené à mettre en œuvre le procédé selon l'une quelconque des revendications 1 à 7.
